# EUROPÄISCHE PATENTSCHRIFT

(11) **EP 2 288 512 B1**
(45) Veröffentlichungstag und Bekanntmachung des Hinweises auf die Patenterteilung: **11.06.2014**
(21) Anmeldenummer: 09765472.7
(22) Anmeldetag: 28.04.2009
(51) Int. Cl.: B60N 2/20, B60N 2/225, B60N 2/235

(54) **BESCHLAG FÜR EINEN FAHRZEUGSITZ**
FITTING FOR A VEHICLE SEAT
ARMATURE POUR SIÈGE DE VÉHICULE

(30) Priorität: 16.06.2008 DE 102008029438
(43) Veröffentlichungstag der Anmeldung: 02.03.2011
(73) Patentinhaber: KEIPER GmbH & Co. KG, 67657 Kaiserslautern (DE)
(72) Erfinder: THIEL, Peter, 42899 Remscheid (DE)
(74) Vertreter: Liedtke, Markus
(86) Internationale Anmeldenummer: PCT/EP2009/003062
(87) Internationale Veröffentlichungsnummer: WO 2009/152892

(56) Entgegenhaltungen:
- DE-A1-102006 044 489
- FR-A- 2 799 420
- US-A1- 2006 012 232

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der DE 10 2006 044 489 A1 ist ein Beschlag dieser Art für einen Fahrzeugsitz eines zweitürigen Kraftfahrzeuges bekannt, welcher dazu dient, durch das vorwärts erfolgende Freischwenken der Lehne den Zugang zum Fond zu ermöglichen und mehrere, unterschiedlich geneigte Gebrauchsstellungen der Lehne für den Gebrauch des Fahrzeugsitzes durch einen Insassen zur Verfügung zu stellen. In den Gebrauchsstellungen sind das dritte Beschlagteil und das Rastelement mittels einer am dritten Beschlagteil schwenkbar gelagerten Klinke verriegelt, welche in die Rückwärts-Schwenkrichtung mit ihrem Lagerbolzen an einem radial vorstehenden Anschlag anliegt und in die Vorwärts-Schwenkrichtung gegen einen Rastanschlag gespannt ist.

Die US 2006/0012232 A1 zeigt einen weiteren Beschlag der eingangs genannten Art, bei welchem das dritte Beschlagteil eine konkave gebogene, in Umfangsrichtung weisende Fläche aufweist, die mit einem axial abstehenden Niet am Rastelement zusammenwirkt, um die Schwenkbewegung in die Rückwärts-Schwenkrichtung zu beschränken. Das dritte Beschlagteil und das Rastelement sind mittels eines längsverschieblich am Rastelement geführten Riegels miteinander verriegelbar.

In der FR 2 799 420 A1 ist ein Beschlag der eingangs genannten Art beschrieben, bei dem vom dritten Beschlagteil ein Nocken axial absteht, welcher mit einem radialen Vorsprung am Rastelement zusammenwirkt, um die Schwenkbewegung in die Rückwärts-Schwenkrichtung zu beschränken. Das dritte Beschlagteil und das Rastelement sind mittels eines schwenkbaren Klinke dritten Beschlagteil miteinander verriegelbar. Zusätzlich ist bei diesem Beschlag das dritte Beschlagteil lösbar mit der Lehne, d.h. mit einem an der Lehne befestigten vierten Beschlagteil, verriegelt, wodurch die Lehne in eine horizontale Tischstellung geschwenkt werden kann.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem als Anschlag axial vorstehende Anschlagnocken vorgesehen sind, wird ein radiales Vorstehen eines Anschlagelementes über eine ringförmige Kontur, insbesondere des Rastelementes, vermieden. Dies verringert die Verletzungs- oder Beschädigungsgefahr von einsteigenden Personen und zu verstauender Ladung, welche bei einem radial vorstehenden Anschlag und freigeschwenkter Lehne bestehen könnte. Dem Freischwenken gleichgesetzt ist ein Übergang in eine Tischstellung. Eine einfache Herstellung der Anschlagnocken ergibt sich, wenn sie aus dem Material des dritten Beschlagteils und des Rastelementes ausgestellt sind, beispielsweise in Zungenform. Es können jeweils mehrere Anschlagnocken vorgesehen sein, die in Umfangsrichtung paarweise verteilt sind. Größere Abstände der Kontaktpunkte im verriegelten Zustand bewirken bei einer belasteten Lehne, dass die Lagerkraft sich bei einem Richtungswechsel der Belastung allenfalls wenig ändert und somit eine durch Lagerspiel bedingte Geräuschbildung vermieden wird. Das Lagerspiel kann durch ein elastisches Element eliminiert werden.

Das Verriegeln von drittem Beschlagteil und Rastelement erfolgt vorzugsweise mittels einer beweglichen Klinke, die im Normalfall vorzugsweise durch ein Spannelement spielfrei gestellt wird und im Crashfall vorzugsweise durch ein Fangelement abgestützt wird. Mittels einer Entriegelungswelle, deren Drehung um ihre eigene Achse die Klinke entriegelt, wird auf einfache Weise innerhalb des Beschlags ein relativ schmutzfreier Raum geschaffen. Beim Entriegeln schwenkt die Entriegelungswelle vorzugsweise wenigstens eines dieser beiden Elemente von der Klinke weg. Das andere Element ist vorzugsweise mit einem Leerweg auf Mitnahme gekoppelt, so dass es letztendlich auch durch die sich drehende Entriegelungswelle von der Klinke weggeschwenkt wird, damit diese entriegelt.

Die Erfindung ist vorzugsweise bei längseinstellbaren Fahrzeugsitzen von zweitürigen Kraftfahrzeugen mit zentrischem Freischwenken der Lehne einsetzbar, kann aber auch für andere Fahrzeugsitze verwendet werden.

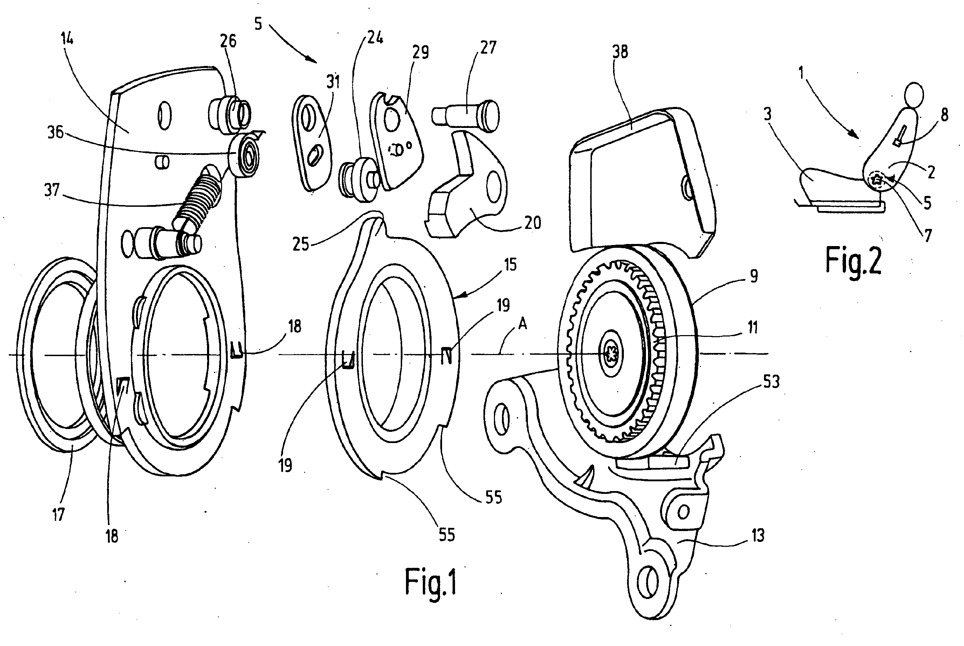

Im folgenden ist die Erfindung anhand eines in der Zeichnung dargestellten Ausführungsbeispiels näher erläutert. Es zeigen
- Fig. 1: eine Explosionsdarstellung des Ausführungsbeispiels, bei welcher die ganz rechts dargestellten Bauteile in einer anderen Perspektive gezeigt sind,
- Fig. 2: eine schematische Seitenansicht eines Fahrzeugsitzes,
- Fig. 3: eine Ansicht der für das Freischwenken relevanten Baugruppe des Auführungsbeispiels,
- Fig. 4: einen Schnitt entlang der Linie IV-IV in Fig. 3,

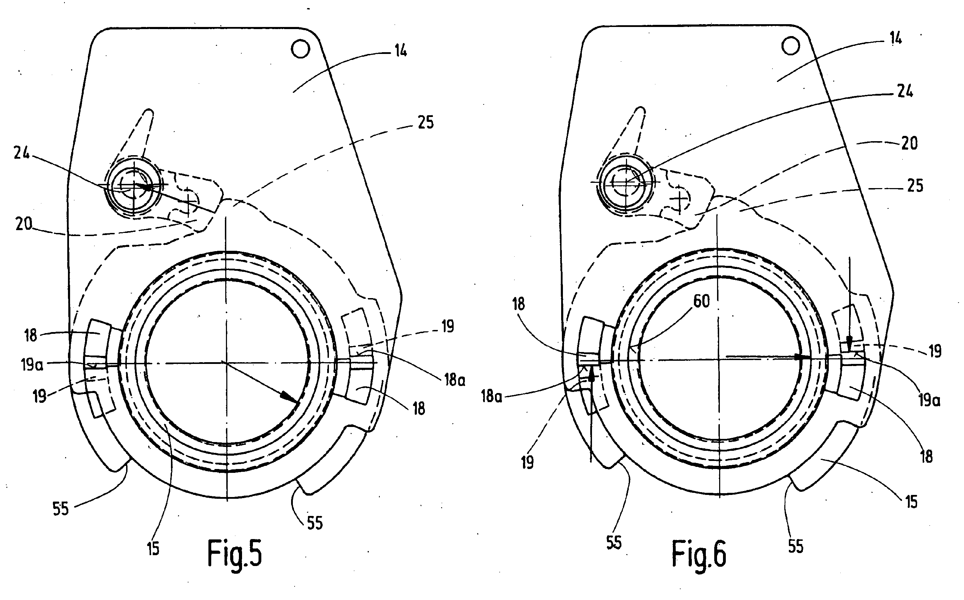

- Fig. 5: die Rückseite der in Fig. 3 dargestellten Baugruppe bei einer Belastung in Vorwärtsschwenkrichtung, wobei die Stütz- und Lagerkräfte durch Pfeile dargestellt sind,
- Fig. 6: die Rückseite der in Fig. 3 dargestellten Baugruppe bei einer Belastung in Rückwärtsschwenkrichtung, wobei die Stütz- und Lagerkräfte durch Pfeile dargestellt sind, und

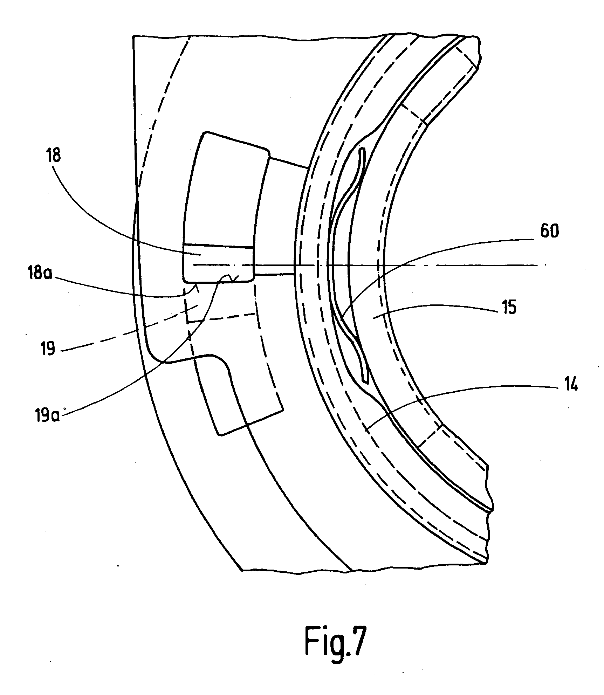

- Fig. 7: eine Teilansicht von Fig. 6 mit optionalem elastischem Element.

Ein Fahrzeugsitz 1 für ein zweitüriges Kraftfahrzeug weist für die Neigungseinstellung und das Freischwenken seiner Lehne 2 relativ zu seinem Sitzteil 3 auf seinen beiden Seiten je einen Beschlag 5 auf. Auf der Außenseite des Fahrzeugsitzes 1 ist für die Neigungseinstellfunktion an einem der Beschläge 5 ein Handrad 7 und zwischen beiden Beschlägen 5 eine mit dem Handrad 7 verbundene Welle vorgesehen, während für die Freischwenkfunktion an der Lehne 2 ein Handhebel 8 beweglich angebracht ist.

Jeder Beschlag 5 umfasst als Herz ein erstes Beschlagteil 9 und ein zweites Beschlagteil 11, welche in baulicher Hinsicht zusammen eine scheibenförmige Einheit bilden, wie sie beispielsweise in der DE 101 05 282 B4 beschrieben ist. Die beiden Beschlagteile 9 und 11 stehen im Ausführungsbeispiel mittels eines - vorliegend selbsthemmenden - Exzenterumlaufgetriebes miteinander in Getriebeverbindung, welches vorliegend ein spielfreies Feststellen der Beschlagteile 9 und 11 ermöglicht und zum Verstellen eine Relativdrehung der Beschlagteile 9 und 11 mit überlagerter Taumelbewegung erzwingt. Dadurch sind mehrere, stufenlos ineinander übergehende Gebrauchsstellungen definiert. Ein solcher Getriebebeschlag ist beispielsweise in der DE 44 36 101 A1 beschrieben. Es sind aber auch andere Getriebebeschläge und - theoretisch - auch Rastbeschläge (wie sie beispielsweise in der WO 00/44582 A1 beschrieben sind) einsetzbar.

Das erste Beschlagteil 9 ist mit der Struktur des Sitzteils 3 verbunden ("sitzteilfest"), indem ein sitzteilfest angebrachter Adapter 13 am ersten Beschlagteil 9 befestigt ist. Jeder Beschlag 5 umfasst ferner ein drittes Beschlagteil 14, welches mit der Lehnenstruktur der Lehne 2 verbunden ("lehnenfest") ist. Das plattenförmige dritte Beschlagteil 14 ist am zweiten Beschlagteil 11 auf der vom ersten Beschlagteil 9 abgewandten Seite gelagert und für das zentrisch erfolgende Freischwenken relativ zum zweiten Beschlagteil 11 um eine zentrale Achse A verschwenkbar, ansonsten aber mit dem zweiten Beschlagteil 11 verriegelt. Die Achse A und ihre Lage innerhalb des Fahrzeugsitzes 1 definieren die vorliegend verwendeten Richtungsangaben. Das Freischwenken, welches dem erleichterten Zugang der nächsten Sitzreihe dient, kann zugleich ein Übergang in eine Tischstellung mit näherungsweise horizontaler Lehne 2 sein, was die Lademöglichkeiten verbessert.

Ein ringförmiges Rastelement 15 am zweiten Beschlagteil 11 dient der schwenkbaren Lagerung des dritten Beschlagteils 14. Hierfür weist das Rastelement 15 beispielsweise einen Kragen auf, auf dem das dritte Beschlagteil 14 mit einer Lageröffnung, die ebenfalls in der Art eines Kragens ausgebildet sein kann, schwenkbar gelagert ist. Das Rastelement 15 ist direkt oder indirekt mit dem zweiten Beschlagteil 11 fest verbunden, beispielsweise mittels einer Laserschweißnaht (oder auf andere Weise). Eine ringförmige Befestigungscheibe 17, welche das dritte Beschlagteil 14 im Lagerbereich übergreift, ist zur axialen Sicherung des letzteren mit dem Rastelement 15 und optional mit dem zweiten Beschlagteil 11 fest verbunden. In radialer Richtung besteht ein gewisses Lagerspiel, und in axialer Richtung sind das dritte Beschlagteil 14 und das Rastelement 15 um bis zu einer Materialstärke voneinander beabstandet. In abgewandelter Ausführung ist das dritte Beschlagteil 14 auf einem Kragen oder dergleichen der Befestigungsscheibe 17 gelagert und das mit letzterer fest verbundene Rastelement 15 dient der axialen Sicherung.

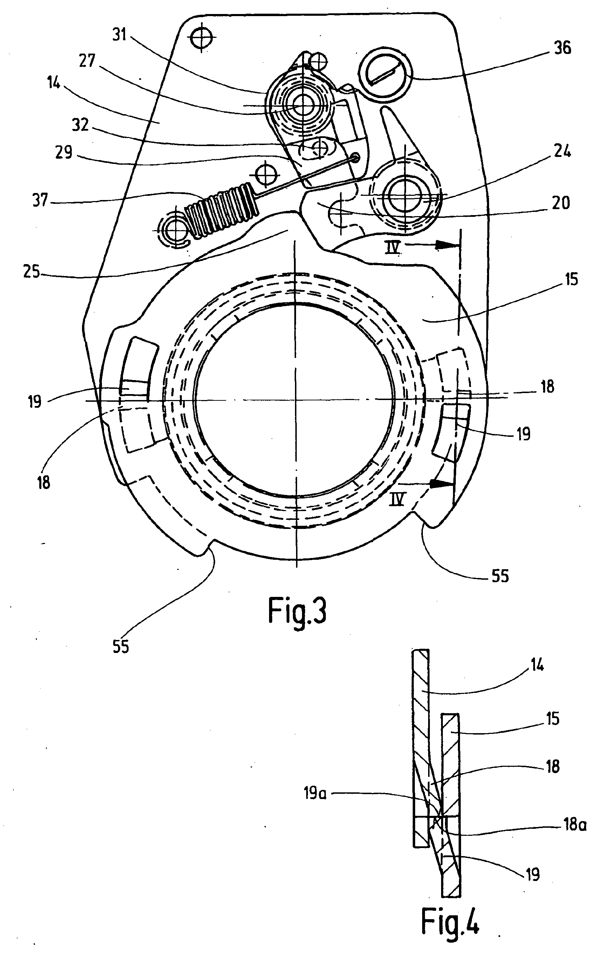

Als Anschlag, der in die Rückwärts-Schwenkrichtung der Lehne 2 (in Fig. 3 im Uhrzeigersinn) wirksam ist, weist das dritte Beschlagteil 14 wenigstens einen, vorliegend zwei diagonal bezüglich der Achse A gegenüberliegende erste Anschlagnocken 18 und das Rastelement 15 in gleicher Anzahl und entsprechender Anordnung zweite Anschlagnocken 19 auf. Jeder erste Anschlagnocken 18, welcher eine in Rückwärts-Schwenkrichtung weisende erste Anschlagfläche 18a aufweist, wirkt mit genau einem zweiten Anschlagnocken 19 zusammen, welcher eine in Vorwärts-Schwenkrichtung weisende zweite Anschlagfläche 19a aufweist. Die paarweise in Umfangsrichtung verteilten Anschlagnocken 18 und 19 sind von der Achse A radial beabstandet angeordnet, durch eine axiale, einander zugewandte Ausstellung im Material in Zungenform ausgebildet und mit ihren am freien Ende der Zungen stirnseitig befindlichen Anschlagflächen 18a und 19a in Umfangsrichtung einander zugewandt.

Während bekannte Anschläge radial über den äußeren Rand des zugeordneten Bauteils überstehen, stehen die erfindungsgemäßen Anschlagnocken 18 und 19 nur axial vor, d.h. sie sind radial innerhalb des äußeren Randes des zugeordneten Bauteils angeordnet. Die Anschlagnocken 18 und 19 sind so ausgestellt, dass sie mit ihren Anschlagflächen 18a und 19a möglichst weit in den Zwischenraum zwischen drittem Beschlagteil 14 und Rastelement 15 ragen. Die Ausstellungen bewirken, dass auf der jeweiligen Rückseite eine Vertiefung im Material entsteht. Die Anschlagflächen 18a und 19a verlaufen in axialer und radialer Richtung, d.h. ohne Komponente in Umfangsrichtung, so dass sie im Falle einer Anlage die Kräfte optimal übertragen können. Der durch die Anschlagnocken 18 und 19 gebildete Anschlag begrenzt die Schwenkbewegung des dritten Beschlagteils 14 einseitig nach hinten, und zwar sowohl im Normalfall nach dem Freischwenken als auch im (Heck-)Crashfall.

Eine Klinke 20 ist mittels eines Lagerbolzens 24 schwenkbar am dritten Beschlagteil 14 auf der dem zweiten Beschlagteil 11 (und dem Rastelement 15) zugewandten Seite gelagert. Zum Verriegeln und zur Begrenzung der Schwenkbewegung des dritten Beschlagteils 14 nach vorne im (Front-)Crashfall ist in radialer Verlängerung der Klinke 20 am Rastelement 15 ein Rastanschlag 25 vorgesehen, vorzugsweise angeformt. Der Lagerbolzen 24 ist als Exzenterbolzen ausgebildet, d.h. er ist um eine zur Schwenkachse der Klinke 20 versetzte Achse im dritten Beschlagteil 14 relativ zu diesem drehbar gelagert. Zum Ausgleich der Fertigungstoleranzen ist der Lagerbolzen 24 so eingestellt und fixiert, dass die Klinke 20 mit einen maximalem Klinkeneingriff spielfrei am zweiten Rastanschlag 25 anliegt, allerdings außerhalb des Winkelbereichs der Selbsthemmung.

Parallel zum Lagerbolzen 24 ist im dritten Beschlagteil 14 mittels einer Lagerbuchse 26 eine Entriegelungswelle 27 drehbar gelagert, auf welcher drehfest ein Fangelement 29 und schwenkbar ein Spannelement 31 sitzt. Das Fangelement 29 und das Spannelement 31 sind um die durch die Entriegelungswelle 27 definierte gemeinsame Achse schwenkbar und bei verriegeltem dritten Beschlagteil 14 auf die Klinke 20 ausgerichtet. Die Funktionsweise von Fangelement 29 und Spannelement 31 ist in der DE 44 39 644 A1 beschrieben.

Das Spannelement 31 liegt mit einer exzentrisch zur Entriegelungswelle 27 gekrümmten Spannfläche in einem Winkel außerhalb des Selbsthemmungsbereichs an einer Anlagefläche der Klinke 20 an. Das Spannelement 31 wird von einer als Spiralfeder ausgebildeten ersten Feder 36 vorgespannt, so dass es die Klinke 20 beaufschlagt (und diese gegen den Rastanschlag 25 spannt). Dadurch ist das dritte Beschlagteil 14 spielfrei mit dem Rastelement 15 und damit mit dem zweiten Beschlagteil 11 verriegelt. Das Fangelement 29 wird von einer als Schrauben-Zugfeder ausgebildeten zweiten Feder 37 beaufschlagt und liegt an einem Anschlag des dritten Beschlagteils 14 an. Im Normalfall, d.h. für den normalen Sitzgebrauch, wird die Klinke 20 durch das Spannelement 31 in ihrer Position gehalten, und das Fangelement 29 ist in geringem Abstand zur Klinke 20 angeordnet. Im Crashfall, wenn Crashkräfte auf die Klinke 20 wirken, kann das Spannelement 31 wegen der fehlenden Selbsthemmung öffnen. Nach einer geringfügigen Schwenkbewegung der Klinke 20 gelangt diese in Anlage an das Fangelement 29. Das Fangelement 29 stützt dann die Klinke 20 ab, welche innerhalb des Selbsthemmungsbereichs am Fangelement 29 anliegt, vorzugsweise tangential oder konzentrisch und möglichst flächig. Damit wird verhindert, dass die Klinke 20 (weiter) öffnet.

Das Fangelement 29 und das Spannelement 31 sind miteinander mittels einer Schlitz-Zapfen-Führung 32 mit einem Leerweg auf Mitnahme gekoppelt. Hierfür weist das Spannelement 31 einen um die Entriegelungswelle 27 gekrümmten Schlitz auf, in welchen ein Zapfen des Fangelementes 29 greift. Ein am dritten Beschlagteil 14 befestigter Deckel 38 deckt die Klinke 20 samt Lagerbolzen 24, das Fangelement 29, das Spannelement 31 und die Federn 36 und 37 ab und schützt diese vor Verschmutzung.

Um den Einstellbereich bei der Neigungseinstellung zu begrenzen, d.h. die relative Verdrehung des ersten Beschlagteils 9 und des zweiten Beschlagteils 11 zu begrenzen, steht vom Adapter 13 parallel zur Achse A ein Sperranschlag 53 ab, den zwei Begrenzungsanschläge 55 des Rastelementes 15 zwischen sich aufnehmen. Durch Zusammenwirken mit einem entsprechenden Begrenzungsanschlag am dritten Beschlagteil 14 kann der Sperranschlag 53 auch das Freischwenken der Lehne 2, d.h. die Schwenkbewegung des dritten Beschlagsteils 14 nach vorne, begrenzen.

Auf der vom zweiten Beschlagteil 11 abgewandten Seite des dritten Beschlagteils 14 ist mit der Entriegelungswelle 27 ein Arm oder Hebel drehfest verbunden, an welchem ein mit dem Handhebel 8 in Wirkverbindung stehender Seilzug befestigt ist. Alternativ kann die Entriegelungswelle 27 auch über einen elektrischen Aktuator, beispielsweise einen Stellmotor oder dergleichen, betätigt werden. Zum Entriegeln des dritten Beschlagteils 14 zu Beginn des Freischwenkens wird die Entriegelungswelle 27 um ihre eigene Achse gedreht. Die Entriegelungswelle 27 nimmt das Fangelement 29 mit, um es zu öffnen, d.h. sie trennt und/oder entfernt es von der Klinke 20. Dabei nimmt das Fangelement 29 mittels der Schlitz-Zapfen-Führung 32 das Spannelement 31 mit, um die Klinke 20 freizugeben. Das schwenkende Fangelement 29 kommt in Anlage an einen - im wesentlichen radial abstehenden - Entriegelungsfinger der Klinke 20 und zieht diese dadurch auf bzw. unterstützt diese beim Öffnen. Die Klinke 20 ist damit vollständig geöffnet.

Wenn bei den bekannten Lösungen, bei denen die Klinke 20 oder der Lagerbolzen 24 mit einem weiteren Rastnocken am Rastelement 15 zusammenwirken, um das Schwenken des dritten Beschlagsteils 14 in Rückwärts-Schwenkrichtung zu begrenzen, die Lehne 2 belastet wird und die Richtung der Belastung von der Vorwärts-Schwenkrichtung zur Rückwärts-Schwenkrichtung wechselt, so wechselt dadurch die Richtung der Lagerkraft um einen Winkel. Dieser Winkel entspricht ungefähr einem Winkel zwischen den Anlagestellen der beiden Rastnocken an der Klinke 20, wobei der Lagerbolzen 24 als Scheitel dient. Dieser Winkel kann also aufgrund der geringen Abstände recht groß werden, kann also beispielsweise 90° betragen. Das radiale Spiel an der Lagerstelle zwischen drittem Beschlagteil 14 und Rastelement 15 erlaubt beim Wechsel der Belastungsrichtung eine kleine Relativbewegung unter Bildung von Geräuschen.

Bei der erfindungsgemäßen Lösung sind die Abstände zwischen der Anlagestelle des Rastnocken 25 an der Klinke 20 und den Anschlagnocken 18 und 19 deutlich größer, so dass der Winkel, um den die Lagerkraft bei einem Wechsel der Belastungsrichtung wechselt, deutlich kleiner ist. Um die geräuschbildende Relativbewegung zwischen drittem Beschlagteil 14 und Rastelement 15 in deren Lagerstelle zu verhindern, ist vorzugsweise ein elastisches Element 60, beispielsweise eine Stahlfeder oder ein Kunststoffelement vorgesehen. Dieses in radialer Richtung wirkende elastische Element 60 ist in der Lagerstelle zwischen drittem Beschlagteil 14 und Rastelement 15 angeordnet, also vorzugsweise zwischen dem Kragen des Rastelementes 15 und dem Rand der Lageröffnung des dritten Beschlagteils 14. Damit wird das radiale Spiel in dieser Lagerstelle eliminiert.

### Bezugszeichenliste

- 1: Fahrzeugsitz
- 2: Lehne
- 3: Sitzteil
- 5: Beschlag
- 7: Handrad
- 8: Handhebel
- 9: erstes Beschlagteil
- 11: zweites Beschlagteil
- 13: Adapter
- 14: drittes Beschlagteil
- 15: Rastelement
- 17: Befestigungsscheibe
- 18: erster Anschlagnocken
- 18a: erste Anschlagfläche
- 19: zweiter Anschlagnocken
- 19a: zweite Anschlagfläche
- 20: Klinke
- 24: Lagerbolzen
- 25: Rastanschlag
- 26: Lagerbuchse
- 27: Entriegelungswelle
- 29: Fangelement
- 31: Spannelement
- 32: Schlitz-Zapfen-Führung
- 36: erste Feder
- 37: zweite Feder
- 38: Deckel
- 53: Sperranschlag
- 55: Begrenzungsanschlag
- 60: elastisches Element
- A: Achse

## Patentansprüche

1. Beschlag für einen Fahrzeugsitz, insbesondere für einen Kraftfahrzeugsitz, mit einem sitzteilfesten ersten Beschlagteil (9), einem zweiten Beschlagteil (11), welches für die Neigungseinstellung der Lehne (2) des Fahrzeugsitzes (1) zwischen mehreren Gebrauchsstellungen relativ zum ersten Beschlagteil (9) verdrehbar ist, einem Rastelement (15), welches mit dem zweiten Beschlagteil (11) fest verbunden ist, einem lehnenfesten, mit dem Rastelement (15) verriegelbaren und für ein Freischwenken der Lehne (2) relativ zum zweiten Beschlagteil (11) um eine Achse (A) schwenkbaren dritten Beschlagteil (14), einem Anschlag (18, 19) zum einseitigen Begrenzen der Schwenkbewegung des dritten Beschlagteils (14), wobei am dritten Beschlagteil (14) wenigstens ein axial vorstehender erster Anschlagnocken (18) ausgebildet ist **dadurch gekennzeichnet, dass** am Rastelement (15) wenigstens ein axial vorstehender zweiter Anschlagnocken (19) ausgebildet ist, welcher mit dem ersten Anschlagnocken (18) durch Zusammenwirken als Anschlag (18, 19) die Schwenkbewegung des dritten Beschlagteils (14) begrenzen, wobei die Anschlagnocken (18, 19) mit ihren Anschlagflächen (18a, 19a) in einen Zwischenraum zwischen dem dritten Beschlagteil (14) und dem axial davon beabstandeten Rastelement (15) ragen.

2. Beschlag nach Anspruch 1, **dadurch gekennzeichnet, dass** der erste Anschlagnocken (18) eine erste Anschlagfläche (18a) und der zweite Anschlagnocken (19) eine zweite Anschlagfläche (19a) aufweist, wobei die Anschlagflächen (18a, 19a) in Umfangsrichtung um die Achse (A) einander zugewandt sind und durch Anlage aneinander die Schwenkbewegung des dritten Beschlagteils (14) begrenzen.

3. Beschlag nach Anspruch 2, **dadurch gekennzeichnet, dass** die Anschlagflächen (18a, 19a) nur in axialer und radialer Richtung verlaufen.

4. Beschlag nach Anspruch 2 oder 3, **dadurch gekennzeichnet, dass** die erste Anschlagfläche (18a) in Rückwärts-Schwenkrichtung und die zweite Anschlagfläche (19a) in Vorwärts-Schwenkrichtung weist.

5. Beschlag nach einem der vorhergehenden Ansprüche, **dadurch gekennzeichnet, dass** die Anschlagnocken (18, 19) von der Achse A beabstandet und radial innerhalb des äußeren Randes des zugeordneten Bauteils (14, 15) angeordnet sind.

6. Beschlag nach einem der vorhergehenden Ansprüche, **dadurch gekennzeichnet, dass** zwei erste Anschlagnocken (18), welche diagonal bezüglich der Achse A gegenüberliegend angeordnet sind, und zwei zweite Anschlagnocken (19) in entsprechender Anordnung vorgesehen sind.

7. Beschlag nach einem der vorhergehenden Ansprüche, **dadurch gekennzeichnet, dass** die Anschlagnocken (18, 19) jeweils durch eine axiale, einander zugewandte Ausstellung im Material ausgebildet sind.

8. Beschlag nach Anspruch 7, **dadurch gekennzeichnet, dass** die Anschlagnocken (18, 19) in Zungenform ausgebildet sind und ihre Anschlagflächen (18a, 19a) sich stirnseitig am freien Ende der Zungen befinden.

9. Beschlag nach einem der vorhergehenden Ansprüche, **dadurch gekennzeichnet, dass** das dritte Beschlagteil (14) am Rastelement (15) mit radialem Spiel gelagert ist, und dass radial zwischen dem dritten Beschlagteil (14) und dem Rastelement (15) ein elastisches Element (60) vorgesehen ist, welches das radiale Spiel eliminiert.

10. Beschlag nach einem der vorhergehenden Ansprüche, **dadurch gekennzeichnet, dass** zum Verriegeln des dritten Beschlagteils (14) mit dem Rastelement (15) eine schwenkbar am dritten Beschlagteil (14) gelagerte Klinke (20) vorgesehen ist, welche mit einem Rastnocken (25) am Rastelement (15) zusammenwirkt.

11. Beschlag nach Anspruch 10, **dadurch gekennzeichnet, dass** in den Gebrauchsstellungen der Lehne (2) im Normalfall ein federbelastetes Spannelement (31) die Klinke (20) beaufschlagt, wodurch das dritte Beschlagteil (14) verriegelt bleibt.

12. Beschlag nach Anspruch 10 oder 11, **dadurch gekennzeichnet, dass** in den Gebrauchsstellungen der Lehne (2) im Crashfall ein - insbesondere federbelastetes - Fangelement (29) die Klinke (20) abstützt, wodurch das dritte Beschlagteil (14) verriegelt bleibt.

13. Beschlag nach Anspruch 12, **dadurch gekennzeichnet, dass** eine Entriegelungswelle (27) vorgesehen ist, deren Drehung um ihre eigene Achse die Klinke (20) entriegelt, wobei das Fangelement (29) und/oder das Spannelement (31) mit der Entriegelungswelle (27) auf Mitnahme gekoppelt sind.

14. Beschlag nach einem der Ansprüche 10 bis 13, **dadurch gekennzeichnet, dass** die Klinke (20) mittels eines als Exzenterbolzen ausgebildeten Lagerbolzens (24) schwenkbar am dritten Beschlagteil (14) gelagert ist, wobei der Lagerbolzen (24) vorzugsweise so einstellbar und vorzugsweise auch fixierbar ist, dass die Klinke (20) mit maximalem Klinkeneingriff und/oder spielfrei mit dem Rastelement (15) verriegelt.

## Claims

1. Fitting for a vehicle seat, particularly for a motor vehicle seat, having a first fitting part (9) fixed to a seat part, a second fitting part (11), that may be rotated between a plurality of usage positions relative to the first fitting part (9) for setting the inclination of the backrest (2) of the vehicle seat (1), a detent element (15) which is fixedly connected to the second fitting part (11), a third fitting part (14) fixed to the backrest, which may be locked by the detent element (15) and pivotable about an axis (A) relative to the second fitting part (11) for the free pivoting of the backrest (2), a stop (18, 19) for limiting the pivoting motion of the third fitting part (14) on one side, at least one axially protruding first stop cam (18) being formed on the third fitting part (14), **characterized in that** at least one axially protruding second stop cam (19) is formed on the detent element (15), which by cooperating as a stop (18, 19) with the first stop cam (18) limits the pivoting motion of the third fitting part (14), the stop cams (18, 19) protruding with their stop surfaces (18a, 19a) into an intermediate space between the third fitting part (14) and the detent element (15) axially spaced apart therefrom.

2. Fitting according to Claim 1, **characterized in that** the first stop cam (18) has a first stop surface (18a) and the second stop cam (19) has a second stop surface (19a), the stop surfaces (18a, 19a) facing one another in the peripheral direction about the axis (A) and by bearing against one another limiting the pivoting motion of the third fitting part (14).

3. Fitting according to Claim 2, **characterized in that** the stop surfaces (18a, 19a) only extend in the axial and radial direction.

4. Fitting according to Claim 2 or 3, **characterized in that** the first stop surface (18a) faces in the rearward pivoting direction and the second stop surface (19a) faces in the forward pivoting direction.

5. Fitting according to one of the preceding claims, **characterized in that** the stop cams (18, 19) are spaced apart from the axis A, and arranged radially inside the outer edge of the associated component (14, 15).

6. Fitting according to one of the preceding claims, **characterized in that** two first stop cams (18) are provided, which are arranged diagonally opposite one another relative to the axis A, and two second stop cams (19) are provided in a corresponding arrangement.

7. Fitting according to one of the preceding claims, **characterized in that** the stop cams (18, 19) are formed in each case by an axial projection in the material, which face one another.

8. Fitting according to Claim 7, **characterized in that** the stop cams (18, 19) are configured in the form of tongues, and their bearing surfaces (18a, 19a) are located on the front face at the free end of the tongues.

9. Fitting according to one of the preceding claims, **characterized in that** the third fitting part (14) is mounted on the detent element (15) with radial clearance, and **in that** a resilient element (60) is provided radially between the third fitting part (14) and the detent element (15) which eliminates the radial clearance.

10. Fitting according to one of the preceding claims, **characterized in that** for locking the third fitting part (14) to the detent element (15) a pawl (20) mounted pivotably on the third fitting part (14) is provided which cooperates with a detent cam (25) on the detent element (15).

11. Fitting according to Claim 10, **characterized in that** in the usage positions of the backrest (2) in the normal case a spring-loaded clamping element (31) acts on the pawl (20), whereby the third fitting part (14) remains locked.

12. Fitting according to Claim 10 or 11, **characterized in that** in the usage positions of the backrest (2) in the event of a crash, a - particularly spring-loaded - catch element (29) supports the pawl (20), whereby the third fitting part (14) remains locked.

13. Fitting according to Claim 12, **characterized in that** an unlocking shaft (27) is provided, the rotation thereof about its own axis unlocking the pawl (20), the catch element (29) and/or the clamping element (31) being coupled to the unlocking shaft (27) in entrainment.

14. Fitting according to one of Claims 10 to 13, **characterized in that** the pawl (20) is mounted pivotably on the third fitting part (14) by means of a bearing pin (24) configured as an eccentric pin, the bearing pin (24) preferably being able to be adjusted in such a manner and preferably also being able to be fixed such that the pawl (20) is locked to the detent element (15) with maximum engagement of the pawl and/or without clearance.

## Revendications

1. Armature pour un siège de véhicule, en particulier pour un siège de véhicule automobile, comprenant une première partie d'armature (9) fixée à la partie d'assise, une deuxième partie d'armature (11), laquelle peut être tournée par rapport à la première partie d'armature (9) entre plusieurs positions d'utilisation pour l'ajustement de l'inclinaison du dossier (2) du siège de véhicule (1), un élément d'encliquetage (15), lequel est relié solidement à la deuxième partie d'armature (11), une troisième partie d'armature (14) fixée au dossier, pouvant être verrouillée sur l'élément d'encliquetage (15) et pivotante autour d'un axe (A) par rapport à la deuxième partie d'armature (11) pour un pivotement libre du dossier (2), et une butée (18, 19) pour limiter unilatéralement le mouvement de pivotement de la troisième partie d'armature (14), au moins une première came de butée (18) faisant saillie axialement étant réalisée sur la troisième partie d'armature (14), **caractérisée en ce qu'**au moins une deuxième came de butée (19) faisant saillie axialement est réalisée sur l'élément d'encliquetage (15), laquelle deuxième came de butée limite par coopération conjointement avec la première came de butée (18), en tant que butée (18, 19), le mouvement de pivotement de la troisième partie d'armature (14), les cames de butée (18, 19) faisant saillie par leurs surfaces de butée (18a, 19a) dans un espace intermédiaire entre la troisième partie d'armature (14) et l'élément d'encliquetage (15) espacé axialement de celle-ci.

2. Armature selon la revendication 1, **caractérisée en ce que** la première came de butée (18) comprend une première surface de butée (18a) et la deuxième came de butée (19) comprend une deuxième surface de butée (19a), les surfaces de butée (18a, 19a) étant tournées l'une vers l'autre dans la direction périphérique autour de l'axe (A) et, par appui l'une contre l'autre, limitant le mouvement de pivotement de la troisième partie d'armature (14).

3. Armature selon la revendication 2, **caractérisée en ce que** les surfaces de butée (18a, 19a) ne s'étendent que dans la direction axiale et radiale.

4. Armature selon la revendication 2 ou 3, **caractérisée en ce que** la première surface de butée (18a) est orientée dans le sens de pivotement vers l'arrière et la deuxième surface de butée (19a) est orientée dans le sens de pivotement vers l'avant.

5. Armature selon l'une quelconque des revendications précédentes, **caractérisée en ce que** les cames de butée (18, 19) sont disposées de manière espacée de l'axe A et radialement à l'intérieur du bord extérieur du composant associé (14, 15).

6. Armature selon l'une quelconque des revendications précédentes, **caractérisée en ce que** deux premières cames de butée (18), lesquelles sont disposées de manière diamétralement opposée par rapport à l'axe A, et deux deuxièmes cames de butée (19) agencées de manière correspondante sont prévues.

7. Armature selon l'une quelconque des revendications précédentes, **caractérisée en ce que** les cames de butée (18, 19) sont réalisées à chaque fois par des protubérances axiales, tournées l'une vers l'autre, dans le matériau.

8. Armature selon la revendication 7, **caractérisée en ce que** les cames de butée (18, 19) sont réalisées sous forme de languettes et leurs surfaces de butée (18a, 19a) se situent du côté frontal à l'extrémité libre des languettes.

9. Armature selon l'une quelconque des revendications précédentes, **caractérisée en ce que** la troisième partie d'armature (14) est montée sur l'élément d'encliquetage (15) avec un jeu radial, et **en ce qu'**un élément élastique (60) est prévu radialement entre la troisième partie d'armature (14) et l'élément d'encliquetage (15), lequel élément élastique supprime le jeu radial.

10. Armature selon l'une quelconque des revendications précédentes, **caractérisée en ce qu'**un cliquet (20) monté de manière pivotante sur la troisième partie d'armature (14) est prévu pour le verrouillage de la troisième partie d'armature (14) sur l'élément d'encliquetage (15), lequel cliquet coopère avec une came d'encliquetage (25) sur l'élément d'encliquetage (15).

11. Armature selon la revendication 10, **caractérisée en ce que** dans les positions d'utilisation du dossier (2), en cas normal, un élément de serrage (31) sollicité par ressort sollicite le cliquet (20), de sorte que la troisième partie d'armature (14) reste verrouillée.

12. Armature selon la revendication 10 ou 11, **caractérisée en ce que** dans les positions d'utilisation du dossier (2), en cas de collision, un élément de capture (29) - en particulier sollicité par ressort - supporte le cliquet (20), de sorte que la troisième partie d'armature (14) reste verrouillée.

13. Armature selon la revendication 12, **caractérisée en ce qu'**il est prévu un arbre de déverrouillage (27) dont la rotation autour de son axe propre déverrouille le cliquet (20), l'élément de capture (29) et/ou l'élément de serrage (31) étant accouplé(s) par entraînement à l'arbre de déverrouillage (27).

14. Armature selon l'une quelconque des revendications 10 à 13, **caractérisée en ce que** le cliquet (20) est monté de manière pivotante sur la troisième partie d'armature (14) au moyen d'un boulon de palier (24) réalisé sous forme de boulon excentrique, le boulon de palier (24) pouvant de préférence être ajusté et de préférence également fixé de telle sorte que le cliquet (20) soit verrouillé sur l'élément d'encliquetage (15) avec un engagement maximal du cliquet et/ou sans jeu.
